# EUROPÄISCHE PATENTANMELDUNG

(11) **EP 1 502 519 A1**
(43) Veröffentlichungstag der Anmeldung: **02.02.2005**
(21) Anmeldenummer: 04405440.1
(22) Anmeldetag: 09.07.2004
(51) Int. Cl.: A47B 31/06, B62B 5/02

(54) **Transportwagen insbesondere für Speisen und Getränke**

(30) Priorität: 26.07.2003 CH 13032003
(71) Anmelder: Ellema AG, 8951 Fahrweid (CH)
(72) Erfinder: Müller-Roth, Peter W., 5430 Wettingen (CH)
(74) Vertreter: Rutz, Peter

(57) **Zusammenfassung**

Der Transportwagen (1) weist ein Gestell (2) auf, das an der einen Seite des Transportwagens (1) zwei gerade laufende Bockrädern (31) und an der anderen Seite des Transportwagens (1) mit zwei auslenkbaren Lenkrädern (32) versehen ist. Erfindungsgemäss ist zwischen den Bockrädern (31) eine Hubeinheit (4) mit einem Hebeelement (43) angeordnet, mittels dessen der Transportwagen (1) stufenweise anhebbar und von dessen Anwender somit über Treppen transportierbar ist.

## Beschreibung

Die Erfindung betrifft einen Transportwagen, insbesondere einen in Reisezügen einsetzbaren, mit Speisen und Getränken beladbaren Servierwagen, nach dem Oberbegriff des Patentanspruchs 1.

Für das Deponieren und den Transport von Speisen und Getränken, die Passagieren in Fahrzeugen, insbesondere in Reisezügen serviert werden, werden Servierwagen verwendet, die mit Rollen oder Rädern versehen sind. Wie in der DE 101 50 749 A1 beschrieben, sind diese Servierwagen in beladenem Zustand sehr schwer, so dass sie ausserhalb und innerhalb der Züge vom Anwender nur in Bereichen mit keiner oder nur geringer Steigung verschoben und sonst mittels weiterer Transportgeräte, wie Hubstapler und Lifte, transportiert werden.

Konsequenterweise sind an den Umladeplätzen, an denen die Servierwagen von einem ersten zu einem zweiten Fahrzeug bzw. Reisezug transferiert werden, die entsprechenden Transportgeräte und gegebenenfalls Hilfspersonal vorzusehen. Aufwendungen dieser Art werden von den Transportgesellschaften jedoch vorzugsweise vermieden oder reduziert, so dass der Einsatz der Servierwagen oft einschneidenden Beschränkungen unterworfen ist.

Der vorliegenden Erfindung liegt daher die Aufgabe zugrunde, einen Transportwagen, insbesondere einen Servierwagen zu schaffen, der nicht den genannten Beschränkungen unterworfen ist.

Diese Aufgabe wird mit einem Servierwagen gelöst, welcher die in Anspruch 1 angegebenen Merkmale aufweist. Vorteilhafte Ausgestaltungen der Erfindung sind in weiteren Ansprüchen angegeben.

Der Transportwagen, der beispielsweise in der Ausgestaltung eines Servierwagens dem Transport von Speisen und Getränken in Reisezügen dient, weist ein Gestell bzw. Fahrgestell auf, an dem an der einen Seite des Transportwagens zwei gerade laufende Bockräder und an dem an der anderen Seite des Transportwagens zwei auslenkbare Lenkräder vorgesehen sind. Erfindungsgemäss ist zwischen den Bockrädern eine Hubeinheit mit einem Hebeelement angeordnet, mittels dessen der Transportwagen stufenweise anhebbar und somit über Treppen transportierbar ist.

In der Ausgestaltung als Servierwagen kann der Transportwagen daher von einem ersten Reisezug über Treppen zu einem zweiten Reisezug transportiert werden, ohne dass weitere Transportgeräte, Lifte oder Hubstapler, sowie Hilfspersonal benötigt werden.

Mittels eines über den Bockrädern angeordneten und mit dem Gestell verbundenen Gestänges kann der Transportwagen geführt werden. Am oberen Ende weist das als Hebel dienende Gestänge einen ersten Griff auf, der dem Halten des Transportwagens dient, während dieser stufenweise angehoben wird. Unterhalb des ersten Griffs ist ein zweiter Griff angeordnet, der dem Halten des Transportwagens dient, während dieser, insbesondere zwischen Fahrzeugen, verschoben wird. Der Transportwagen kann daher mittels des zweiten Griffs zu einer Treppe geschoben oder gezogen werden und dort mittels des ersten Griffs erfasst und gegen die Treppe gekippt werden, so dass das Hubelement der Hubvorrichtung in Eingriff mit den Treppenstufen gelangt.

In einer vorzugsweisen Ausgestaltung weist die Hubvorrichtung eine Kupplungseinheit auf, die erlaubt, entweder das Hebeelement oder die Bockräder an die Antriebseinheit der Hubvorrichtung anzukoppeln. Der Transportwagen lässt sich in dieser Ausgestaltung daher über Treppen oder über Wege mit hoher Steigung befördern, so dass dessen Mobilität praktisch unbeschränkt ist.

In der Ausgestaltung als Servierwagen weist das Gestell oberhalb der Lenkräder einen dritten Griff auf, der dem Halten des Transportwagens dient, während dieser, insbesondere innerhalb von Fahrzeugen, verschoben wird. Dieser dritte Griff ist dabei so tief gelegt, dass der Anwender bzw. das Servierpersonal bequemen Zugriff zu den zu verkaufenden Produkten hat, die gegebenenfalls in einem Behälter auf dem Servierwagen gelagert sind.

Das Gestänge mit dem ersten und zweiten Griff kann auch aus zwei über ein Gelenk miteinander verbundenen Teilen bestehen, von denen das mit dem ersten Griff versehene obere Teil in eine Richtung gegen den Transportwagen absenkbar ist.

Dadurch lässt sich der Transportwagen in kleineren Räumen parkieren. Ferner kann der Zugriff zu den zu verkaufenden Produkten, nach dem Herunterklappen des oberen Teils bequem von beiden Seiten erfolgen. Da der Zugriff zu den Produkten bei der Verwendung eines zusammenklappbaren Gestänges bequem von der Gestängeseite her erfolgen kann, kann auf die Verwendung des dritten Griffs verzichtet werden.

Für das Bremsen des Transportwagens weisen die Bockräder vorzugsweise eine Bremsvorrichtung, beispielsweise eine Scheibenbremse auf, die mittels eines am Gestänge angeordneten Hebels betätigt werden kann. Zur Arretierung des Transportwagens ist vorzugsweise eine Brems- oder Blockiervorrichtung vorgesehen, mittels der die Lenkräder fixierbar sind. Der Hebel zur Betätigung der Brems- oder Blockiervorrichtung für die Lenkräder kann dabei, sofern vorhanden, beim dritten Griff und, sofern kein dritter Griff vorgesehen ist, am Gestänge, vorzugsweise am zweiten Griff vorgesehen sein.

Das Gestell bzw. das Fahrgestell kann verschiedenartig ausgestaltet und mit Kammern oder Schubladen versehen sein. Vorzugsweise ist das Gestell derart ausgestaltet, dass
a) ein erster Freiraum an der Unterseite des Transportwagens gebildet wird, innerhalb dessen die Hubvorrichtung angeordnet ist;
b) ein zweiter, der Aufnahme von wenigstens einer Schublade dienender Freiraum im Mittelbereich des Transportwagens gebildet wird;
c) ein dritter, der Aufnahme eines Behälters dienender Freiraum auf der Oberseite des Transportwagens gebildet wird; und/oder
d) ein vierter, der Aufnahme eines Akkumulators für die Hubvorrichtung dienender Freiraum, der zur vorteilhafteren Verteilung des Gesamtgewichts an der Seite des Transportwagens über den Bockrädern gebildet wird.

Die vorgesehen Schubladen sind vorzugsweise gegen die Position ausziehbar, die der Anwender bei der Abgabe von Produkten einnimmt. Sofern der Hubvorrichtung gegenüberliegend eine Schublade angeordnet ist, ist diese seitlich oder in die der Hubvorrichtung abgewandte Richtung ausziehbar.

Nachfolgend wird die Erfindung anhand von Zeichnungen näher erläutert. Dabei zeigt:
- Figur 1: einen mit drei Griffen 261, 262, 25 und einer Hubvorrichtung 4 versehenen Servierwagen 1; und
- Figur 2: einen mit zwei Griffen 261, 262 und einer Hubvorrichtung 4 versehenen Servierwagen 1.

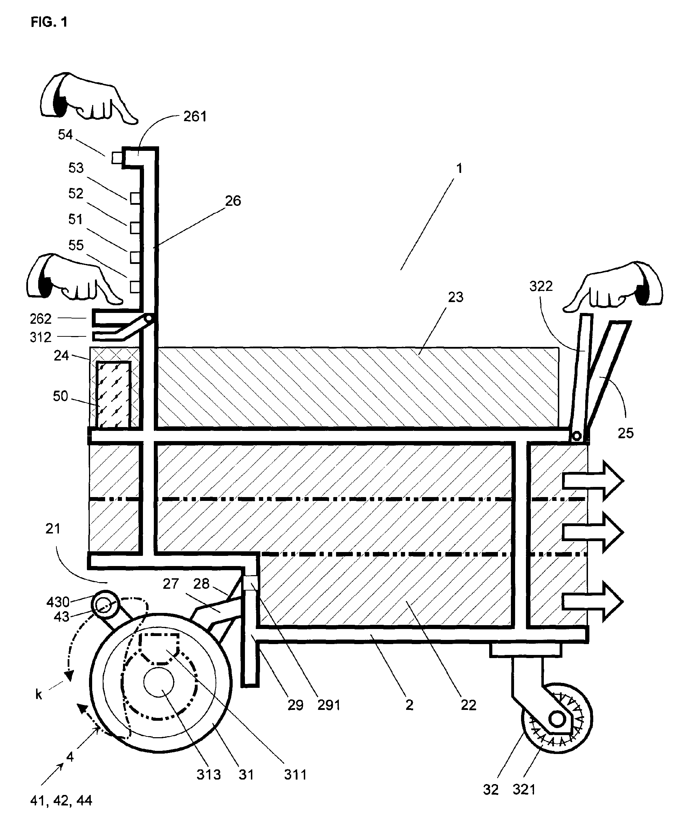

Figur 1 zeigt einen erfindungsgemässen Transportwagen, der als Servierwagen 1 ausgestaltet ist. Der Servierwagen 1 weist ein Gestell bzw. Fahrgestell 2 auf, an dem an der einen Seite des Transportwagens 1 zwei gerade laufende Bockräder 31 und an dem an der anderen Seite des Transportwagens 1 zwei auslenkbare Lenkräder 32 vorgesehen sind, welche erlauben, den Servierwagen in die gewünschte Richtung zu verschieben. Zwischen den Bockrädern 31 ist eine mittels mehreren Schaltern 51, ..., 54 steuerbare und von einem Akkumulator 50 gespeiste Hubeinheit 4 mit einem Hebeelement 43 angeordnet, mittels dessen der Transportwagen stufenweise anhebbar und somit über Treppen transportierbar ist. Hubvorrichtungen dieser Art werden beispielsweise von der SANO Transportgeräte GmbH, A-4040 Lichtenberg hergestellt.

Das Hebeelement 43 ist beispielsweise ein Schwingarm mit in Vorwärtsrichtung gebremsten Stützrädern 430, der mittels eines Elektromotors 41 und eines Hebelgetriebes 42 in beiden Richtungen entlang einer Kurvenbahn k führbar ist. Die durch eine Achse 313 miteinander verbundenen Bockräder 31 sind mittels Profilelementen 27 mit Profilelementen 29 des Gestells 2 verbunden. Der vorzugsweise ebenfalls von den Profilelementen 27 gehaltene Elektromotor 41 ist über ein weiteres Profilelement 28 mit einem mit den Profilelementen 29 verschweissten Querelement 291 verbunden. Die zum Halten des Elektromotors 41 und der Bockräder 31 dienenden Profilelemente 27, 28 sind dabei soweit seitlich geneigt, dass über dem Elektromotor 41 genügend Freiraum für die Bewegungen des Hebeelements 43 verbleiben.

Das in Figur 1 gezeigte Gestell 2 weist eine aus Profilelementen gebildete Rahmenstruktur auf,
a) mit einem ersten Freiraum 21 an der Unterseite des Transportwagens 1, innerhalb dessen die Hubvorrichtung 4 angeordnet ist;
b) mit einem zweiten, der Aufnahme von drei Schubladen dienenden Freiraum 22 im Mittelbereich des Transportwagens 1;
c) mit einem dritten, der Aufnahme eines Behälters dienenden Freiraum 23 auf der Oberseite des Transportwagens 1; und
d) einem vierten, der Aufnahme des Akkumulators 50 dienenden Freiraum 24.

Schematisch ist gezeigt, dass alle drei Schubladen gegen die Position ausziehbar sind, die der Anwender bei der Abgabe von Produkten einnimmt.

Zur Bedienung des Servierwagens 1 ist das Gestell 2 auf der Seite der Hubvorrichtung 4 mit einem ersten und einem zweiten Griff 261, 262 und auf der Seite der Lenkräder 32 mit einem dritten Griff 25 versehen. Der erste Griff 261 ist oben an einem oberhalb der Hubvorrichtung 4 mit dem Gestell 2 verbundenen Gestänge 26 angeordnet und dient der Führung des Servierwagens 1 beim Anstieg oder Abstieg über Treppen. Unterhalb des ersten Griffs 261 ist der zweite Griff 262 angeordnet, der dem Halten des Servierwagens 1 dient, während dieser, insbesondere zwischen Reisezügen, verschoben wird. Der Servierwagen 1 kann daher mittels des zweiten Griffs 262 zu einer Treppe geschoben oder gezogen werden und dort mittels des ersten Griffs 261 erfasst und gegen die Treppe gekippt werden, so dass das Hubelement 43 der Hubvorrichtung 4 in Eingriff mit den Treppenstufen gelangt. Die Bockräder 31 sind für den Treppentransfer vorzugsweise, gegebenenfalls einseitig arretierbar, so dass ein Rückrollen des Servierwagens 1 ausgeschlossen wird.

Die Hubvorrichtung 4 wird mittels der Schalter 51, ..., 54 gesteuert. Der erste Schalter 51 dient als Hauptschalter zur Inbetriebsetzung des elektrischen Systems. Mit dem zweiten Schalter 52 kann die Drehrichtung und mit dem dritten Schalter 53 die Drehgeschwindigkeit des Hubelements 43 eingestellt werden. Mit dem vierten Schalter 54 kann der Elektromotor 41 in Betrieb gesetzt werden.

In einer vorzugsweisen Ausgestaltung weist die Hubvorrichtung 4 eine Kupplungseinheit 44 auf, die erlaubt, entweder das Hebeelement 41 oder die Bockräder 31 bzw. deren Antriebsachse 313 an den Elektromotor 41 anzukoppeln. Der Servierwagen 1 lässt sich in dieser Ausgestaltung daher mittels des Hubelements 43 über Treppen und mittels des Antriebs der Bockräder 31 über Wege mit hoher Steigung befördern. Die Betätigung der Kupplungseinheit 44 erfolgt mit einem Schalter 55, der nahe beim zweiten Griff 262 angeordnet ist.

In der in Figur 1 gezeigten Ausgestaltung weist das Gestell 2 oberhalb der Lenkräder 32 einen dritten Griff 25 auf, der dem Halten des Servierwagens 1 dient, während dieser insbesondere innerhalb eines Reisezugs verschoben wird. Dieser dritte Griff 25 ist dabei so tief gelegt, dass der Anwender bequemen Zugriff zu den zu verkaufenden Produkten hat. Der Anwender wird von dieser Seite daher nicht durch das Gestänge 26 behindert.

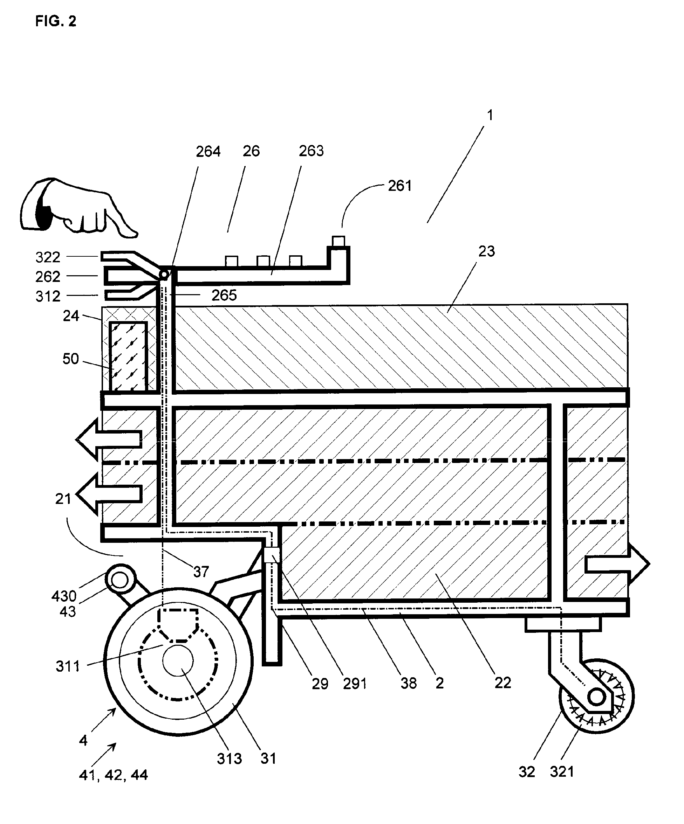

Wie in Figur 2 gezeigt, kann das Gestänge 26 mit dem ersten und zweiten Griff 261 auch aus zwei über ein Gelenk 264 miteinander verbundenen Teilen 263, 265 bestehen, von denen das mit dem ersten Griff 261 versehene obere Teil 263 in eine Richtung gegen den Servierwagen 1 absenkbar ist. Dadurch lässt sich der Servierwagen 1 in kleineren Räumen parkieren. Ferner kann der Zugriff zu den zu verkaufenden Produkten, nach dem Herunterklappen des oberen Teils 263 des Gestänges 262 bequem von beiden Seiten erfolgen. Da der Zugriff zu den Produkten bei der Verwendung eines zusammenklappbaren Gestänges 26 bequem von der Gestängeseite her erfolgen kann, kann auf die Verwendung des dritten Griffs 25 verzichtet werden. Das obere Teil 263 ist dabei vorzugsweise derart ausgestaltet, dass es nach dem Abkippen einen Rahmen bildet, der den Zugriff zu den Produkten nicht beschränkt.

Die oberen beiden Schubladen werden derart angeordnet, dass sie gegen die Anwenderseite bzw. Gestängeseite hin ausgezogen werden können. Die der Hubvorrichtung 4 bzw. den Bockrädern 31 gegenüberliegende Schublade ist gegen die andere Seite hin ausziehbar und wird vorzugsweise mit Produkten beladen, die nicht unmittelbar benötigt werden.

Für das Bremsen des in Figur 1 gezeigten Servierwagens 1 weisen die Bockräder 31 eine Bremsvorrichtung 311 mit einer Scheibenbremse auf, die mittels eines am Gestänge 26 angeordneten Hebels 312 betätigt werden kann. Zur Arretierung des Servierwagens 1 bzw. der Lenkräder 32 ist eine Blockiervorrichtung 321 vorgesehen, die ein Zahnrad aufweist, das mittels eines Keils blockierbar ist. Der Hebel 322 zur Betätigung der Blockiervorrichtung 321 bzw. des Keils ist beim dritten Griff 25 angeordnet. Zusätzlich kann die Arretierung des Servierwagens 1 durch permanente Aktivierung der Scheibenbremse 311 erfolgen.

Bei dem in Figur 2 gezeigten Servierwagen 1 ist der Hebel 322 zur Betätigung der Blockiervorrichtung 321 am zweiten Griff 262 angeordnet. In Figur 2 sind ferner die mit den Hebeln 312, 322 verbundenen Leitungen 37, 38 gezeigt, mittels denen die Bremsvorrichtung 311 und die Blockiervorrichtung 321 betätigt werden.

Der erfindungsgemässe Transportwagen wurde in bevorzugten Ausgestaltungen beschrieben und dargestellt. Anhand der erfindungsgemässen Lehre sind jedoch weitere fachmännische Ausgestaltungen realisierbar. Insbesondere sind verschiedene Ausgestaltungen und Abmessungen der Vorrichtungsteile, insbesondere der Profilteile wählbar sowie verschiedene Fertigungsmaterialien, vorzugsweise Leichtmetalle, wie Aluminium, zu deren Herstellung verwendbar. Weiterhin können verschiedene Hubvorrichtungen verwendet werden. Ferner kann das Gestell bzw. das Fahrgestell auch mit Dämpfungselementen und Federelementen versehen sein.

Die Steuerung des Servierwagens 1 kann selbstverständlich auch durch andere Mittel, spezielle Schalter oder eine elektronische Eingabeeinheit, die noch für andere Zwecke verwendbar ist.

## Patentansprüche

1. Transportwagen (1), insbesondere einen Servierwagen mit einem Gestell (2), an dem an der einen Seite des Transportwagens (1) zwei gerade laufende Bockräder (31) und an dem an der anderen Seite des Transportwagens (1) zwei auslenkbare Lenkräder (32) vorgesehen sind, **dadurch gekennzeichnet, dass** zwischen den Bockrädern (31) eine Hubeinheit (4) mit einem Hebeelement (43) angeordnet ist, mittels dessen der Transportwagen (1) stufenweise anhebbar ist.

2. Transportwagen (1) nach Anspruch 1, **dadurch gekennzeichnet, dass** das Gestell (2) über den Bockrädern (31) ein Gestänge (26) mit einem ersten Griff (261) aufweist, der dem Halten des Transportwagens (1) dient, während dieser stufenweise angehoben wird, und der über einem zweiten Griff (262) angeordnet ist, der dem Halten des Transportwagens (1) dient, während dieser, insbesondere zwischen Fahrzeugen, verschoben wird.

3. Transportwagen (1) nach Anspruch 1 oder 2, **dadurch gekennzeichnet, dass** das Gestell (2) über den Lenkrädern (32) einen dritten Griff (25) aufweist, der dem Halten des Transportwagens (1) dient, während dieser, insbesondere innerhalb von Fahrzeugen, verschoben wird.

4. Transportwagen (1) nach Anspruch 2 oder 3, **dadurch gekennzeichnet, dass** die Bockräder (31) mit einer Bremsvorrichtung (311) und/oder dass die Lenkräder (32) mit einer Brems- oder Blockiervorrichtung (321) versehen sind.

5. Transportwagen (1) nach Anspruch 4, **dadurch gekennzeichnet, dass** der zweite Griff (262) zur Betätigung der Bremsvorrichtung (311) mit einem Hebel (312) versehen ist und dass der zweite oder der dritte Griff (262, 25) zur Betätigung der Brems- oder Blockiervorrichtung (321) mit einem Hebel (322) versehen ist.

6. Transportwagen (1) nach einem der Ansprüche 1 bis 5, **dadurch gekennzeichnet, dass** die Hubvorrichtung (4) eine Kupplungseinheit (44) versehen ist, mittels der entweder das Hebeelement (43) oder die Bockräder (31) an die Antriebseinheit (41) der Hubvorrichtung (4) ankoppelbar sind.

7. Transportwagen (1) nach einem der Ansprüche 1 bis 6, **dadurch gekennzeichnet, dass** das Gestell (2) derart ausgestaltet ist, dass
a) ein erster Freiraum (21) an der Unterseite des Transportwagens (1) gebildet wird, innerhalb dessen die Hubvorrichtung (4) angeordnet ist;
b) ein zweiter, der Aufnahme von wenigstens einer Schublade dienender Freiraum (21) im Mittelbereich des Transportwagens (1) gebildet wird;
c) ein dritter, der Aufnahme eines Behälters dienender Freiraum (23) auf der Oberseite des Transportwagens (1) gebildet wird; und/oder
d) ein vierter, der Aufnahme eines Akkumulators (50) für die Hubvorrichtung (4) dienender Freiraum (24) an der Seite des Transportwagens (1) über den Bockrädern (31) gebildet wird.

8. Transportwagen (1) nach einem der Ansprüche 1 bis 7, **dadurch gekennzeichnet, dass** Schalter (51, ..., 54) vorgesehen sind, mittels denen die Hubvorrichtung (4) steuerbar ist.

9. Transportwagen (1) nach einem der Ansprüche 1 bis 8, **dadurch gekennzeichnet, dass** das Gestell (2) aus Profilteilen oder Rohren aus Metall, vorzugsweise Aluminium, gefertigt ist.

10. Transportwagen (1) nach einem der Ansprüche 1 bis 9, **dadurch gekennzeichnet, dass** das Gestänge (26) ein mit dem ersten Griff (261) versehenes oberes Teil (263) aufweist, das über ein Gelenk (264) mit einem mit dem zweiten Griff (262) versehenen unteren Teil (265) verbunden und gegen den Transportwagen (1) absenkbar ist.
